# EUROPEAN PATENT APPLICATION

(11) **EP 3 617 435 A1**
(43) Date of publication of application: **04.03.2020**
(21) Application number: 19195110.2
(22) Date of filing: 03.09.2019
(51) Int. Cl.: E06B 9/262, B32B 15/08, B32B 15/09, E06B 9/386

(54) **SCREENING ARRANGEMENT FOR A WINDOW**

(30) Priority: 03.09.2018 DK PA201870567
(71) Applicant: VKR Holding A/S, 2970 Hørsholm (DK)
(72) Inventor: NIELSEN, Jørgen, 2970 Hørsholm (DK)
(74) Representative: AWA Denmark A/S

(57) **Abstract**

The present invention relates to a screening arrangement for a window. The screening arrangement comprises: a screening body adapted for screening an aperture of a window frame and moveable between a folded position and a screening position; a first operating element; a second operating element; and two side rails adapted to be connected to side members of said window frame. The screening body comprises a first end edge and a second end edge, said first end edge being fastened to the first operating element and the second end edge being fastened to the second operating element; said first and second operating elements extending substantially in parallel to each other in a first longitudinal direction defining, in the condition of use, a width direction, said first longitudinal direction being substantially perpendicular to a second longitudinal direction defining a height direction, and at least one of said first and second operating elements being moveable independently of the other in said second longitudinal direction, each side rail extending, in the condition of use, substantially perpendicularly to the first and second operating elements in the second longitudinal direction. The screening body comprises a screening portion between the first end edge and the second end edge, the screening portion consisting of a metal layer adhesively bound to a fabric layer, wherein the fabric layer comprises a first polymer, the first polymer having a glass transition temperature in the range of from 80°C to 450°C.

## Description

### Technical Field

The present invention relates to a screening arrangement for a window. The screening arrangement comprises a screening body, first and second operating elements and two side rails wherein the screening body comprises a screening portion made of a metal layer adhesively bound to a fabric layer having glass transition temperatures in the range of from 80°C to 450°C.

### Background Art

Screening arrangements, such as window blinds, are known in various forms. One example is a pleated blind having a cellular structure. Such blinds are typically composed of a cellular screen, for example with a honeycomb construction, which is made up of a series of interconnected rows of cells of thin, foldable material. The cells are fixed between an upper bar and a lower bar and the screen and bars are mounted between a pair of guide rails. The screen can be expanded, contracted and moved to the desired position by movement of one or both of the bars along the guide rails.

To provide complete coverage of a window, the upper bar and lower bar can be moved apart from one another to the greatest extent provided for by the guide rails. During movement of the bars, the cells will expand to the increased area between the bars. Thus, in this position, the cellular screen will cover the window. Since the screen is typically made of a material which restricts the transmission of light, the amount of light entering the room will be reduced. The blind can also assist with thermal insulation.

If a lesser degree of light blockage and/or thermal insulation is required, the blind can be moved towards a folded position by moving the bars closer to one another. This is achieved by sliding one or both of the bars closer together within the side rails. In this way, the flexible material of the screen will adjust, reducing the volume of the cells and thereby reducing the coverage of the screen. This can, for example, allow the user to have just partial coverage of the window.

If little or no coverage is required, the blind can be moved into a folded position. Here, the bars are moved still closer together, causing the cellular structure to fold in on itself. Freedom of movement along the side rails means that the blind can be stored wherever is most convenient along the length of the rails. This will typically be either at the top end or the bottom end of the rails.

In other examples, the window blind may be fixed at one end, typically at the top of a window, with the other end being moveable in order to move the blind between a screening position and a folded position.

An example of a screening arrangement for a window having a screening body, first and second operating elements and two side rails is disclosed in WO2009/056134, the contents of which are herein incorporated by reference. As disclosed in WO2009/056134, a variety of screening arrangements may be used, included a pleated element which comprises a plurality of cells.

An example of a honeycomb screening arrangement is disclosed in EP0222534. In this document, a honeycomb structure is formed of a continuous length of foldable material having its longitudinal edges folded over and secured to a separate strip material. The strip material is also secured to the adjacent cell of the structure, thereby connecting the cells.

In many conventional systems, such as described in EP3357683, the cellular screen is composed of a combination of aluminium and a polyester such as polyethylene terephthalate or polyolefin being glued together. Whilst such screening arrangements are effective, there is room for improvement.

For example, it has been found that the ability of conventional systems to withstand high temperatures encountered during use has scope for improvement. Exposure to high temperatures during summer months can lead to dimensional changes, as a result of which, the screens begin to lose their shape, for example by curving or curling. Such dimensional changes are undesirable from both a cosmetic perspective and a functional perspective. The shape changes can decrease the ability of the blind to block out light. Further, a change in shape can prevent the screens from folding in a tight, compact manner and thus the operation of the screen is also affected.

Dimensional changes can be particularly problematic in connection with so-called "low energy" roof windows. These glazing units are designed to exhibit high degrees of heat insulation to prevent heat loss, whilst simultaneously allowing a high degree of heat from sunlight to enter through the glazing unit. The result is that a screening arrangement on the inside surface of one of these glazing units will need to be able to withstand higher temperatures than a glazing unit which does not exhibit these characteristics, since the low energy glazing units allow more heat energy to pass through the glass.

Structural changes can also be brought about by repeated use over a long period of time. Whilst conventional systems typically have a good lifetime, it would be beneficial to provide a setup which is more resistant to deformation and which can therefore have an even longer lifetime.

In some instances, it would also desirable if the screening arrangement was capable of functioning as a so-called black-out blind such that it allows very little or no light to be transmitted.

Additionally, it is important to keep the structure simple for example in order to save costs for materials and/or simplify the production, whilst still obtaining a stable screening arrangement.

The present invention has been made from a consideration of this.

### Summary of Invention

Thus, according to the present invention, there is provided a screening arrangement for a window, the screening arrangement comprising:
a screening body adapted for screening an aperture of a window frame and moveable between a folded position and a screening position;
a first operating element;
a second operating element;
two side rails adapted to be connected to side members of said window frame;
said screening body comprising a first end edge and a second end edge, said first end edge being fastened to the first operating element and the second end edge being fastened to the second operating element;
said first and second operating elements extending substantially in parallel to each other in a first longitudinal direction defining, in the condition of use, a width direction, said first longitudinal direction being substantially perpendicular to a second longitudinal direction defining a height direction, and at least one of said first and second operating elements being moveable independently of the other in said second longitudinal direction,
each side rail extending, in the condition of use, substantially perpendicularly to the first and second operating elements in the second longitudinal direction, wherein said screening body comprises a screening portion between the first end edge and the second end edge, the screening portion essentially consisting of a metal layer adhesively bound to a fabric layer, wherein the fabric layer comprises a first polymer, the first polymer having a glass transition temperature in the range of from 80°C to 450°C.

The inventors have found that by utilising a first polymer in the fabric layer for which the glass transition temperature is in the range of from 80°C to 450°C, particularly favourable properties are achieved.

For example, the inventors have found that these polymers exhibit particularly good performance characteristics. The polymers have a high degree of strength, whilst maintaining the required degree of flexibility. Thus, even after repeated movement of the screening arrangement between a folded position and screening positions, the screening portion retains the desired shape. This results in improved aesthetics and improved functionality of the screening arrangement, whilst still maintaining a simple construction.

Further, the inventors have also found that the screening arrangements in which the fabric layer includes a polymer having a glass transition temperature in the claimed range are better able to withstand high temperatures compared with conventional systems. Thus, even in prolonged exposure to sunlight during summer months, the screening arrangements of the present invention do not exhibit unwanted loss of shape.

The metal layer acts as a light-blocking layer whilst the fabric layer provides an aesthetically pleasing appearance.

Preferably, the first polymer may have a glass transition temperature in a range selected from the following: from 90°C to 450°C, or from 80°C to 420°C, or from 90°C to 420°C, or from 80°C to 240°C, or from 90°C to 240°C, or from 80°C to 180°C, or from 90°C to 180°C, or from 90°C to 150°C, or from 100°C to 130°C.

It will be understood that the glass transition temperature of a polymer is the temperature at which the polymer melt changes on cooling to a polymer glass or a polymer glass changes on heating to a polymer melt. On heating, at the glass transition temperature, the molecular chains start to rotate freely. Whilst it will be understood that any suitable method may be used to determine glass transition temperature, in the present case the glass transition temperature is determined by differential scanning calorimetry, unless indicated otherwise. In some embodiments the first polymer is selected from the group consisting of polyethylene naphthalate, polymethyl methacrylate, polyether sulfones, polyimides, polytetraflurorethylene and polycarbonate. Preferably, the first polymer is polyethylene naphthalate.

Polymers for the fabric layer are commercially available in the form of fibers having a Denier 0,6-15 and with a cut length from 3-18 mm and are available from e.g. Freudenberg.

These polymers have been found to be particularly suitable for use in the screening arrangement. They provide a good balance between strength and flexibility, can readily be shaped as required for the screening portion and can be processed to provide an aesthetically pleasing screening portion.

In some embodiments the fabric layer comprises a second polymer, the second polymer optionally being a polyester or polyacrylonitrile (acrylic). It will be understood that polyesters are polymers that contain the ester functional group in their main chain. A common example is polyethylene terephthalate.

When the fabric layer comprises a second polymer, the first polymer such as, polyethylene naphthalate, is suitably present in an amount of from 10 to 50 wt%, preferably 20 to 45 wt%, more preferred from 30 to 40 wt%, such as 30 wt%, of the fabric layer.

The use of a second polymer enables the characteristics of the screening arrangement to be enhanced, for example by using a second polymer that has characteristics that differ from the first. Thus, the screening arrangement can benefit from the properties of both the first and second polymer.

The second polymer may be a polyester or acrylic. These polymers exhibit many of the properties that are important for the screening portion of a screening arrangement, such as flexibility, strength and ease of processing, while keeping a cost-efficient product. Preferably, the second polymer is a polyester.

In some embodiments, the first polymer is polyethylene naphthalate and the second polymer is polyethylene terephthalate.

The inventors have found that the combination of polyethylene naphthalate and polyethylene terephthalate results in particularly favourable properties.

Screening arrangements incorporating these materials have a high degree of strength and are resistant to unwanted shape changes. The effect is that the screening arrangement will retain the desired shape, even in high temperature conditions, for example up to temperatures of 130°C. In addition, unwanted changes in shape are resisted, even after repeated opening and closing of the screening arrangement over a long period of time. However, these favourable strength characteristics do not sacrifice usability of the screening arrangement, and it can still be moved from a folded position to a screening position and vice versa in a smooth manner and without requiring excessive force on the part of the user.

Polyethylene naphthalate provides very good strength characteristics and enables the screening arrangement to maintain its shape. By mixing this with polyethylene terephthalate, which does not perform quite as well, but is cheaper, the screening arrangement has a good balance between improved performance but relatively low cost.

The screening arrangements are lightweight and have an appearance that is similar to conventional screening arrangements of this type.

Further, these materials combined with a metal layer exhibit a very low degree of light transmission. In some embodiments, the light transmission is substantially 0%, resulting in a complete "black-out" blind.

Polyethylene naphthalate may be present in fabric layer in an amount of from 10 to 50 wt% and polyethylene terephthalate may be present in an amount of from 50 to 90 wt%. Alternatively, polyethylene naphthalate may be present in an amount of from 20 to 45 wt% and polyethylene terephthalate may be present in an amount of from 55 to 80 wt%. Alternatively, polyethylene napthalate may be present in an amount of from 30 to 40 wt% and polyethylene terephthalate may be present in an amount of from 60 to 70 wt%. All percentages are of the fabric layer Thus, polyethylene naphthalate and polyethylene terephalate may be the only polymers present, or they may be present in quantities which allow for the presence of one or more other polymers.

It has been found that these quantities provide a particularly good balance between strength and cost. In particular, there is enough polyethylene naphthalate present to give very good performance, whilst the presence of polyethylene terephthalate reduces the cost.

The fabric layer may comprise a third polymer, the third polymer optionally being a polyester or polyacrylonitrile. The use of a third polymer enables the characteristics of the screening arrangement to be further enhanced, for example by using a third polymer that has characteristics that differ from the first and second. Thus, the screening arrangement can benefit from the properties of all of the polymers.

The fabric layer may have any suitable form, although in preferred embodiments the fabric layer is non-woven. Non-woven fabric layers have favourable processing properties, and provide the required strength and appearance characteristics.

In some embodiments, the metal layer has a thickness of from 20µm to 80µm, and/or the fabric layer has a thickness of from 25µm to 80µm. Preferably, the metal layer has a thickness of from 40µm to 60µm, and/or the fabric layer has a thickness of from 10µm to 60µm. More preferably, the metal layer has a thickness of around 50µm and the fabric layer has a thickness of around 40-50 µm. and most preferable 30-35 µm. The metal layer and the fabric layer may have the same thickness or may have thickness that are different from one another.

It has been found that these thicknesses provide a good balance of properties. Very thick layers require additional material and are therefore expensive. Very thick layers can also be more rigid and inflexible. Very thin layers are cheaper to form and can be highly flexible, but they may not have sufficient strength to withstand repeated use of the screening arrangement. Further, very thin layers may give greater degrees of light transmittance and therefore poorer performance of the screening arrangement. It has been found that the claimed thicknesses give good strength and flexibility, low light transmittance, whilst still providing a cost effective solution.

In some embodiments, the metal layer comprises aluminium. These Screening arrangements exhibit a very low degree of light transmission. In some embodiments, the light transmission is substantially 0%, resulting in a complete "black-out" blind. Further, the metals are relatively inexpensive, readily available and easy to process.

Aluminium foil is particularly favourable in the construction as it is lightweight, relatively inexpensive and readily available at the desired thickness.

In some embodiments the metal layer comprises an aluminium layer and a polyester layer, such as a PET layer. Suitably the fabric layer is bonded to the polymer side of the metal layer to provide a layer of e.g. alu/PET/fabric layer.

In some embodiments the polyester layer side of the metal layer is coated with a primer. Usable primers are known to the skilled person such as an organic solvent including methylethyl ketone, such a primer is usable used when the fabric layer is non-woven. When the fabric layer is woven the primer may be selected from epoxy, polyethylene, polyester, polyurethane, acrylic or melamine all well known to the skilled person.

In some embodiments, the adhesive used to bond the fabric layer to the metal layer comprises polyacrylonitrile. Alternatively, an aromatic or aliphatic thermoplastic polyurethane may be used, or a co-polyester or silicone hot melt adhesive.

It has been found that these adhesives provide a highly effective bond between the polymer-containing fabric layer and the metal layer. Even after repeated movement between a folded position and screening positions, the bond is resistant to delamination and therefore it contributes to a screening arrangement with a long lifetime.

Further, the adhesives have been found to be resistant to degradation within the temperature ranges expected to be encountered by screening arrangements. Thus, even at extremes of high or low temperature, the adhesive will still perform as expected. The adhesives are relatively easy to process and therefore help to minimise manufacturing costs for the screening arrangement. They also cure sufficiently quickly to enable effective manufacture of the screening arrangement.

In some embodiments, the screening portion comprises a plurality of cells between the first end edge and the second end edge, each cell being adapted to extend, in use, substantially in the first longitudinal direction, the cross section and volume of each cell being adjustable.

Cellular structures are particularly favourable as they provide a foldable arrangement with good properties. In particular, the cells can be folded against one another to form a screening portion that is compact in the folded position. In the screening positions, the cells expand to contain air pockets which provide good thermal insulation.

The perimeter of each cell may be delimited by the metal layer adhesively bound to the fabric layer. Thus, the combination of the fabric layer and the metal layer is arranged to provide the cellular structure. Preferably, the screening portion contains a plurality of sheets, each sheet having the aforementioned structure (i.e. metal layer combined with the fabric layer), and each sheet being shaped, preferably by folding, to form a cell.

Preferably, the cells are arranged with the metal layer facing the interior of the cell.

By having the metal layer facing the interior of the cell, the metal layer is shielded by the fabric layer. The fabric layer can thus be considered as an outer layer and the metal layer considered as an inner layer, with the metal layer being contained and therefore barely visible or not visible during use. Generally, the appearance of the fabric layer is considered to be more aesthetically pleasing that the metal layer. This structure, allows the functionality of the metal layer to be utilised, but with the fabric layer providing an aesthetically pleasing appearance.

The cells may be adapted to have a substantially hexagonal, square, diamond, circular, elliptical or triangular cross section in the screening position.

These structures are readily foldable to give a screening arrangement that is compact when screening is not required. They also provide very good thermal insulation when the screening arrangement is in a screening position by virtue of the air contained within the cells.

In some embodiments, neighbouring cells are adhesively bound to one another. This simplifies the manufacturing process since each cell can be formed individually and then glued to neighbouring cells, rather than requiring a manufacturing process where all cells are made from a single sheet without joins. Any suitable adhesive may be used, although adhesives as defined herein are preferred such as comprising polyacrylonitrile, or aromatic or aliphatic thermoplastic polyurethanes, or co-polyester or silicone hot melts have been found to be particularly effective. These adhesives are generally known in the art and can be obtained from any suitable supplier such as Dow, Henkel, Bostic, Sika Shanghai Tianyang hot melt adhesives.

In some embodiments, the screening arrangement further comprises at least one cord system including a plurality of cords, the cords being affixed to the first and/or second operating elements.

The cord system provides support to the screening arrangement and can assist with the movement of the screening arrangement between folded and screening positions. In particular, the cords can ensure that the first operating element and second operating element remain substantially parallel to one another in use, thereby ensuring easy operation.

Preferably, the cords are positioned out of view of the user, either within the side rails or within the screening body, for example inside the cells of the screening body.

In some embodiments, the first operating element and the second operating element are both adapted for movement along the side rail. Alternatively, one of the first operating element and second operating element may be adapted for movement along the side rails and the other one is adapted to be fixed, directly or indirectly to a frame of a building such that it is not moveable along the side rails.

Thus, both the first and second operating elements may be moveable thereby giving a large degree of flexibility to the positioning of the screening arrangement. Alternatively, one of the operating elements may be fixed. This could be the first operating element or the second operating element. In these embodiments, the screening arrangement is moved between a folded position and screening position by movement of the moveable operating element relative to the fixed operating element. Having a fixed operating element can provide a simpler construction with fewer moving parts.

It will be understood that where one of the operating elements is fixed, it may be fixed in any suitable way. This could for example be by means of a locking system preventing movement within the side rails, or by forming the operating element as a fixed top or bottom element of the screening arrangement.

### Brief Description of Drawings

The present invention will now be described, by way of example, with reference to the accompanying drawings in which:
Fig. 1 is a front view of a window provided with a screening arrangement in an embodiment of the present invention, with the screening arrangement shown in a folded position;
Fig. 2 is a front view of a window provided with the screening arrangement shown in Fig. 1, with the screening arrangement shown in a screening position in which the entire window is covered by the screening body;
Fig. 3a is a front view of a window provided with the screening arrangement shown in Fig. 1, with the screening arrangement shown in a screening position in which part of window is covered by the screen;
Fig. 3b is analogous to Fig. 3a, except that the screening arrangement is shown covering a different part of the window;
Fig. 4 shows a schematic cross section through the screening body of the screening arrangement shown in Fig. 1 (folded position);
Fig. 5 shows a schematic cross section through the screening body of the screening arrangement shown in Fig. 2 (screening position);
Fig. 6 shows a schematic representation of a cross section of a single cell of the screening body with an exploded view in which the material layers can be seen.
Figs. 7a to f show screening arrangements of the prior art and the invention before and after heat testing as described in the examples section.
Figs. 8a to e show screening arrangements of the prior art and the invention before and after wear testing as described in the examples section.

### Description of Embodiments

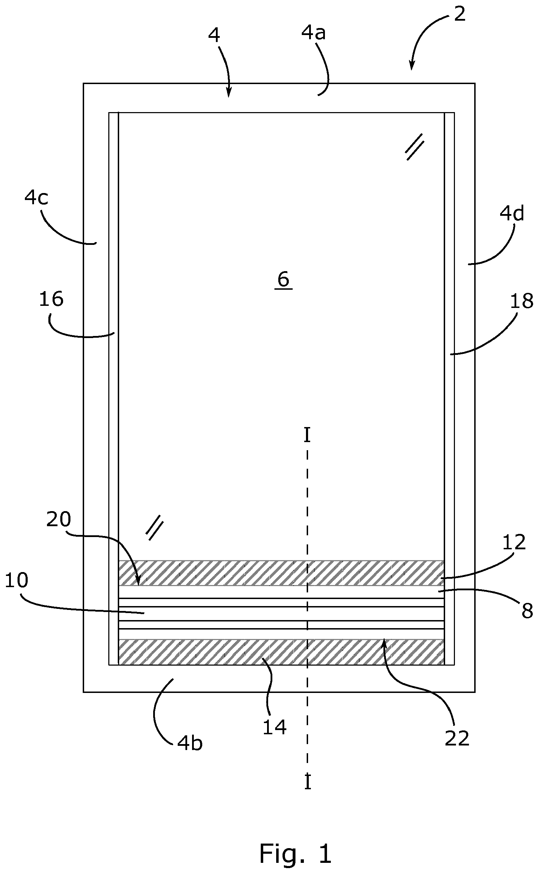

Fig. 1 shows a roof window 2 comprising sash 4. The sash 4 is rectangular and has top 4a, bottom 4b and side members 4c, 4d and an aperture 6 in which the glazing is positioned. For simplicity, the stationary frame of the roof window is not shown. However, it will be understood that the stationary frame is connected to the sash and is positioned in an opening of a building.

As shown in Fig. 1, the window is viewed from the interior side of a building and as can be seen, a screening arrangement 8 is positioned on the window.

The screening arrangement comprises screening body 10 positioned between first operating element 12, second operating element 14 and side rails, 16, 18. The first operating element 12 and second operating element 14 each have the form of an elongate bar having an elongate groove, the groove having a width sufficiently large for a user the insert their fingers into the groove thereby enabling movement of the operating element along the side rails, 16, 18.

The first and second operating elements 12, 14 extend substantially in parallel to each other in a first longitudinal direction defining a width direction. The first longitudinal direction is substantially perpendicular to a second longitudinal direction defining a height direction. Thus, the width direction is parallel to the top and bottom members 4a, 4b of the sash 2 and the height direction is parallel to the side members 4c, 4d of the sash 2.

First end edge 20 of the screening body is located at the first operating element 12 and the second end edge 22 of the screening body is located at the second operating element 14. The first end edge 20 of the screening body is fastened to the first operating element 12 by gripping elements (not shown). Likewise, the second end edge 22 is fastened to the second operating element 14 by gripping elements (not shown). However, it will be understood that any fastening means may be used, including connectors and/or adhesive.

In the embodiment shown, the operating elements have guidance elements (not shown) which sit within tracks of the side rails 16, 18 and slide within the side rails upon movement of the operating elements. As shown, the screening body 10 abuts the side rails, 16, 18 in a manner that allows for movement of the screening body along the length of the side rails, 16, 18 but minimises the amount of light that can pass between the side rails 16, 18 and the screening body 10. In other embodiments, the screening body 10 protrudes into the side rails 16, 18.

Alternative means may be used for interconnection of the operating means with the side rails, as will be understood by the person skilled in the art. Further, in embodiments in which one of the operating elements is fixed, the operating element could be fixed within the side rails, or may be fixed outside of the side rails.

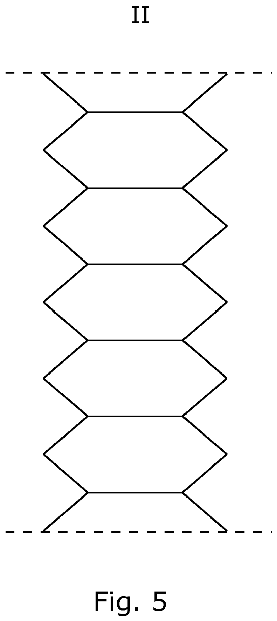

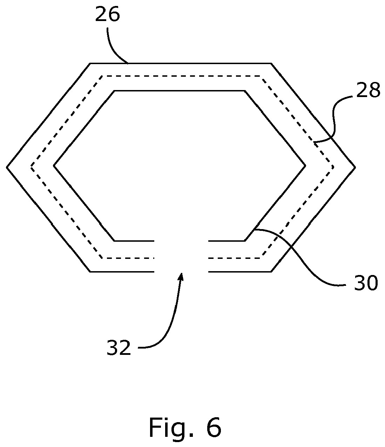

The screening body 10 of Fig. 1 comprises a plurality of cells between the first end edge 20 and the second end edge 22. The cells are adapted to extend, in use, substantially in the first longitudinal direction. The cells are formed from a layered structure in which an aluminium layer is bonded to a fabric layer. The fabric layer comprises polyethylene naphthalate in an amount of 40wt%, with the remainder of the fabric layer being made up of polyethylene terephthalate. The fabric layer is non-woven and has a thickness of 50µm. The aluminium layer has the same thickness and is formed from an aluminium foil. The cells are formed with hexagonal cross sections, as shown in Fig. 5. The layered structure is shown schematically in Fig. 6.

In Fig. 1, the screening arrangement 8 is shown in a folded position. Here, the cells of the screening portion are folded in a compact manner, thereby minimising the area covered by the screening arrangement.

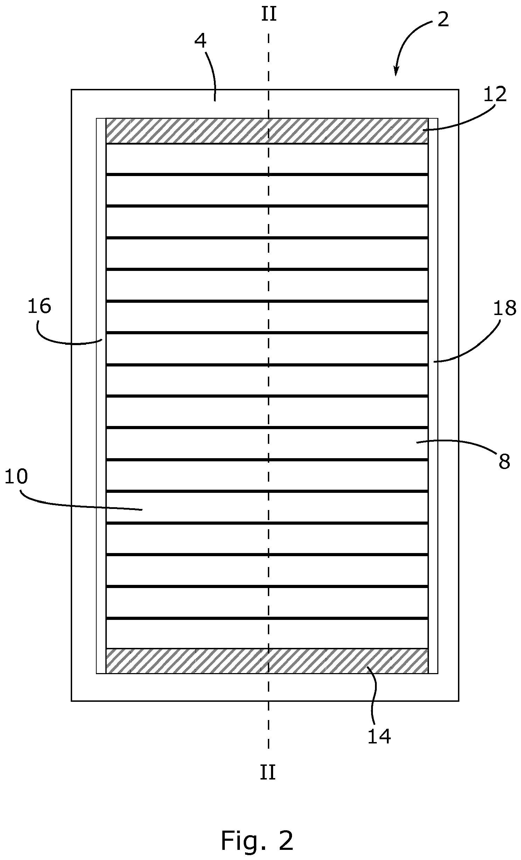

Fig. 2 shows the embodiment of the screening arrangement of Fig. 1, but with the screening body 8 in a screening position. In this screening position, the whole of the glazing is covered by the screening arrangement. This screening position is particularly suitable when the amount of light entering the room is to be minimised and/or when a high degree of thermal insulation is required. The screening arrangement provides privacy by preventing the inside of the room from being viewed from outside the building.

The cells of the screening body 8 have an increased volume in this position compared with the folded positon. Here, the cells each have a substantially hexagonal cross section. Air pockets formed inside the cells provide good thermal insulation.

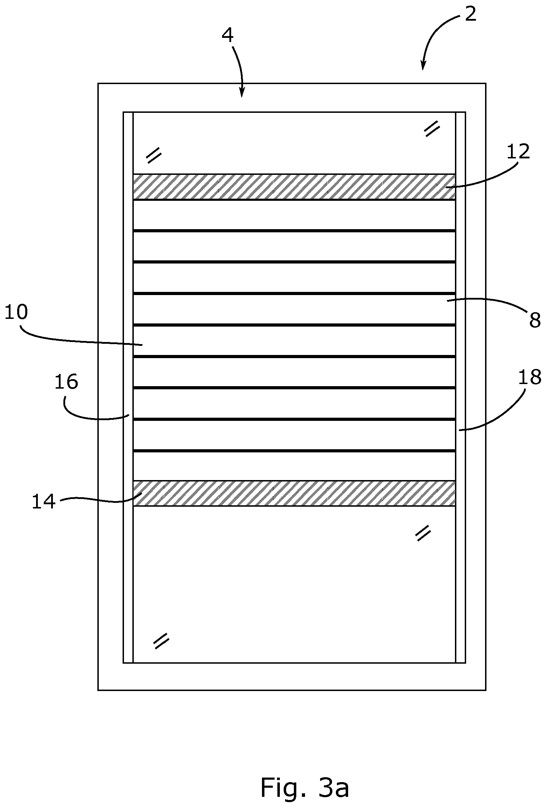

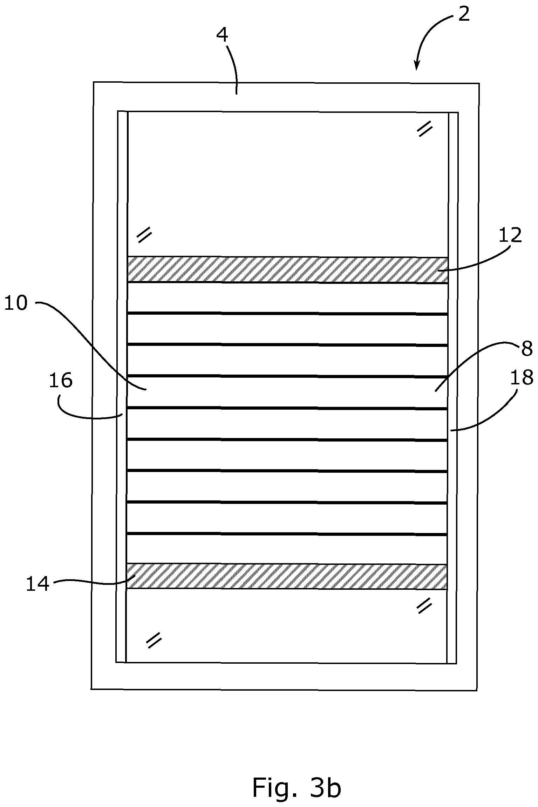

Figs. 3a and 3b also show the embodiment of the screening arrangement shown in Fig. 1, but with the screening body 8 shown in alternative screening positions in which there is partial screening of the glazing. In Fig. 3a, the screening portion screens an upper part of the glazing, and in Fig. 3b a lower part of the glazing is screened. Thus, as can be seen, various different positions of the screening arrangement are possible, depending on the extent to which the glazing is to be covered. These partial screening arrangements can be particularly beneficial to block direct sunlight, without completely preventing light from entering the room. It will be understood that the screening positions shown in Figs. 3a and 3b can be achieved where both the first operating element and the second operating element are moveable. Where one end element is fixed, it is generally fixed at the top or the bottom of the window and thus these screening positions would not be accessible.

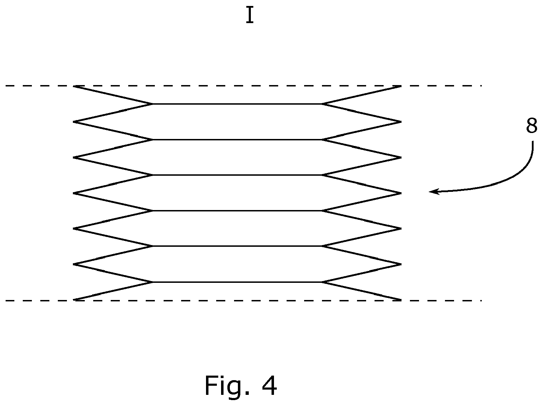

Fig. 4 shows cross section I through the screening body 8 as shown in Fig. 1. As can be seen, the cells have a hexagonal cross section which, in the folded state are tightly compressed.

Fig. 5 shows cross section II through the screening body 8 as show in Fig. 2. As can be seen, the volume of the cells in the screening state is larger than in the folded state. Figs. 4 and 5 are schematic and details such as an indication of the different layers have been omitted for clarity.

Fig. 6 shows a schematic representation of a cell of the screening body of Fig. 1 in an exploded view in which the material layers can be seen. The outermost layer is the fabric layer 26. This has the composition discussed in connection with Fig. 1. Adhesive layer 28 binds the fabric layer to metal layer 30. In this embodiment, the metal layer is made from aluminium foil. In use, the metal layer is hidden from view whilst the fabric layer 26, and in particular its outer part, can be seen by the user and gives the screening arrangement an aesthetically pleasing appearance. This cellular structure may be constructed in any suitable way. However, in the embodiment shown, each cell is formed from a fabric layer adhesively bonded to a metal layer as previously described.

The fabric layer of the desired composition may be synthesised, or purchased, and will generally be provided as a flat sheet. This will then be glued to a sheet of aluminium foil. The combined structure will then be cut into slats of desired dimensions. Each slat can then be folded to give the desired shape of the cell. The number and positioning of the folds will depend on the desired cross section of the cells. The formed cells can then be glued to one another, with the outermost cells being affixed to the operating elements.

As shown in Fig. 6, manufacture in this way will leave a gap 32 at the perimeter of the cell. However, the cells are arranged such that the neighbouring cell will abut the gap (as shown for example in Fig. 5) and thereby the perimeter of the cell is, in effect, closed by a side of the neighbouring cell.

In the described embodiments, the screening arrangement is intended for manual operation i.e. the user moves one or both of the operating elements in order to change the position of the screening body. However, it will be understood that the screening arrangement may alternatively be adapted for use with one or more motors. In these embodiments, a remote control can be operated by a user which in turn causes one or motors to effect movement of one or both operating elements. This is particularly useful for windows which are out of reach. Thus, one or both of the operating elements may be adapted for direct or indirect connection with a motor.

Although not shown, it will be understood that side lights may be integrated into the screening arrangement. These can be particularly beneficial when the screening arrangement is used to provide heat insulation, but when light is still required. Side lights may, for example, be incorporated into side rails, 16, 18.

Whilst the invention has been described particularly in connection with roof windows, it will be understood that the screening arrangements of the present invention may be used with a variety of other windows, including façade windows.

Further, although the screening arrangement has been described as being mounted on the sash of a roof window, a screening arrangement according to the invention may just as well be mounted on the stationary frame instead of the sash and may also be utilised in connection with windows having a frame only, such as stationary skylights, or in connection with doors.

The invention should not be regarded as being limited to the described embodiments. Modifications and combinations of the different embodiments will be apparent to the person skilled in the art.

The below examples illustrate the properties of an illustrative composition of a fabric layer in a screening arrangement according to the invention presented to illustrate the effect of inventive concept. The invention should not be restricted to this specific composition of the fabric layer and adhesive used.

### Examples

### Methods and materials

Screening arrangements were prepared for testing the inventive screening arrangement in comparison to commercial screening arrangements. The screening arrangement only differed in the composition of the fabric layer.

The adhesive layer in both screening arrangements was a polyurethane resin from Fujian Jinjiang Huafu Chemical Engineering Co, Ltd.

In the comparative screening arrangement, the fabric layer was 20 µm.

The screening arrangement according to the invention was made of a fabric layer comprising polyethylene naphthalate and terephthalate polyester naphthalene in a weight ratio of 30:70.

The thickness of the fabric layer in both screening arrangements was 20 µm.

Both screening arrangements were subjected to a heat test and a wear test.

For the heat test the screening arrangements were subjected to a temperature of 90°C for 48 hours.

For the wear test screening arrangements were installed and subjected to cycles of heat up to 90°C and room temperature and simultaneously opened and closed a multitude of thousand times.

After the tests, the screening arrangements were evaluated for a number of properties such as general appearance in both open and closed state, curving - i.e. how the curtain flushes with the window frame in order to block the light; and length of the screening arrangement in their closed state measured before and after being subjected to the heat test - i.e. how the foldability was affected by high temperature.

### Results

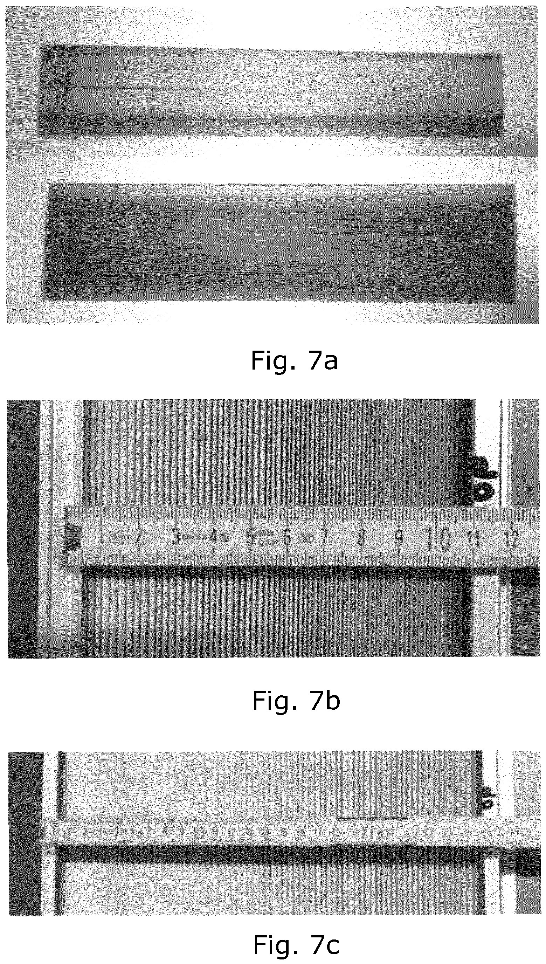

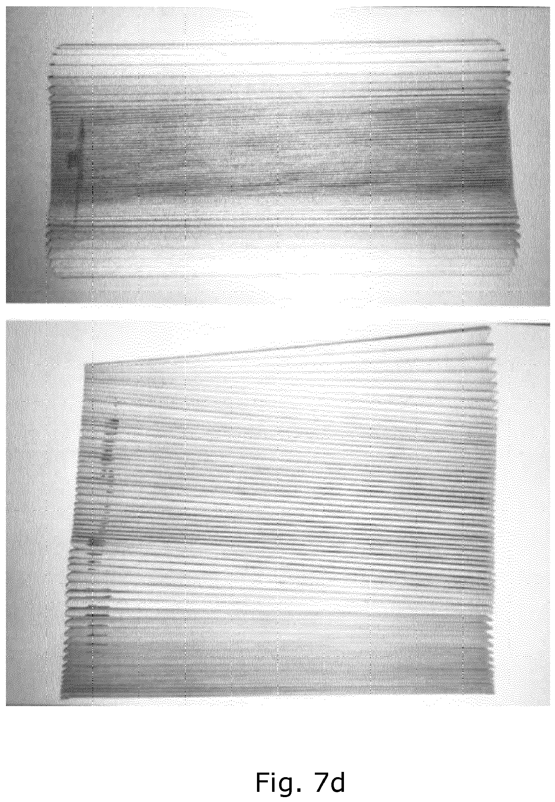

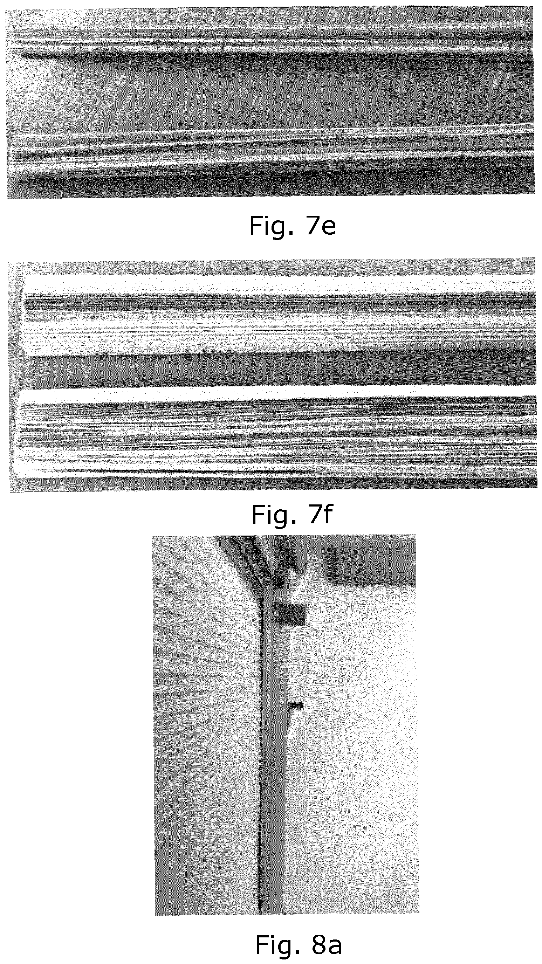

Figs. 7a to f illustrate the length of the folded screening arrangements before and after being subjected to heat. As can be seen a screening arrangements according to the invention did not change the foldability to any large degree. Where the prior art screening arrangements more than doubled in length in its closed state (figures 7a, b and c), whereas the length an inventive screening arrangement appeared not to change markedly (Figure 7f). Also, the prior art screening arrangements showed an irregular shape after being subjected to the heat test (see figure 7d) as compared to the inventive product that showed a regular shape before and after being subjected to the heat test (see figures 7e and f).

Thus, even when blending the prior art fabric layer with as low as 30 wt% polyester naphthalene showed significant improvements over the prior art solutions.

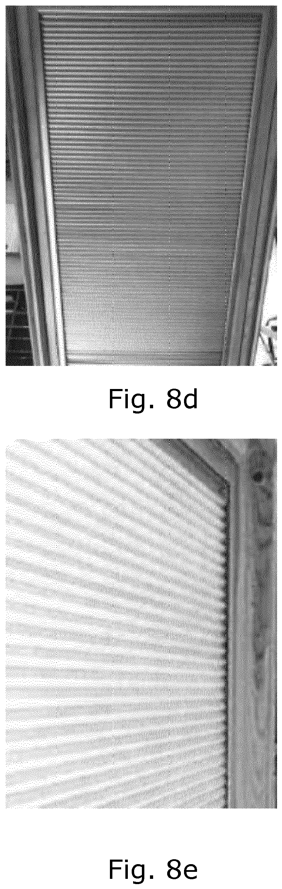

The results of the wear tests before and after the wear cycles are illustrated in figures 8a to e.

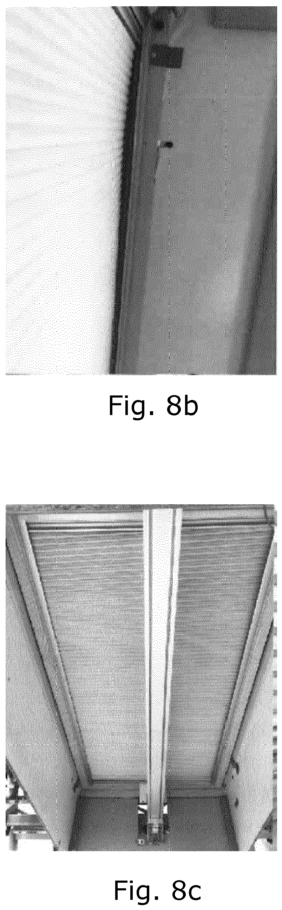

As can be seen from figures 8a and b showing the prior art screening arrangement before and after the test respectively, the tested screening arrangement was curving. This will result in letting light pass at the side rails/gaskets which is undesired. A screening arrangement according to the invention was subjected to the same conditions as the prior art embodiment which is illustrated in figures 8c (before test) and 8d and e (after test) respectively. As can be seen from the pictures, a screening arrangement according to the invention showed a very low to no curving and did not let light pass. Again, a screening arrangement comprising as little as 30 wt% polyester naphthalene showed significant improvements over the prior art solutions.

## Claims

1. A screening arrangement for a window, the screening arrangement comprising:
a screening body adapted for screening an aperture of a window frame and moveable between a folded position and a screening position;
a first operating element;
a second operating element;
two side rails adapted to be connected to side members of said window frame;
said screening body comprising a first end edge and a second end edge, said first end edge being fastened to the first operating element and the second end edge being fastened to the second operating element;
said first and second operating elements extending substantially in parallel to each other in a first longitudinal direction defining, in the condition of use, a width direction, said first longitudinal direction being substantially perpendicular to a second longitudinal direction defining a height direction, and at least one of said first and second operating elements being moveable independently of the other in said second longitudinal direction,
each side rail extending, in the condition of use, substantially perpendicularly to the first and second operating elements in the second longitudinal direction,
wherein said screening body comprises a screening portion between the first end edge and the second end edge, the screening portion comprising or essentially consisting of a metal layer adhesively bound to a fabric layer, wherein the fabric layer comprises a first polymer, the first polymer having a glass transition temperature in the range of from 80°C to 450°C.

2. A screening arrangement according to Claim 1, wherein the first polymer is selected from the group consisting of polyethylene naphthalate, polymethyl methacrylate, polyether sulfones, polyimides, polytetraflurorethylene and polycarbonate.

3. A screening arrangement according to Claim 1 or 2, wherein the first polymer, such as polyethylene naphthalate, is present in an amount of from 10 to 50 wt%, preferably 20 to 45 wt%, more preferably 30 to 40 wt%.

4. A screening arrangement according to any preceding claim, wherein the fabric layer comprises a second polymer, the second polymer optionally being a polyester or polyacrylonitrile.

5. A screening arrangement according to Claim 4, wherein the first polymer is polyethylene naphthalate and the second polymer is polyethylene terephthalate.

6. A screening arrangement according to Claim 5, wherein polyethylene naphthalate is present in an amount of from 10 to 50 wt% and polyethylene terephthalate is present in an amount of from 50 to 90 wt%, or
polyethylene naphthalate is present in an amount of from 20 to 45 wt% and polyethylene terephthalate is present in an amount of from 55 to 80 wt%, or
polyethylene napthalate is present in an amount of from 30 to 40 wt% and polyethylene terephthalate is present in an amount of from 60 to 70 wt%.

7. A screening arrangement according to any of claims 4 to 6, wherein the fabric layer comprises a third polymer, the third polymer optionally being a polyester or polyacrylonitrile.

8. A screening arrangement according any preceding claim, wherein the fabric layer is non-woven.

9. A screening arrangement according to any preceding claim, wherein the metal layer has a thickness of from 20µm to 80µm, and/or the fabric layer has a thickness of from 20µm to 80µm, preferably wherein the metal layer has a thickness of from 40µm to 60µm, and/or the fabric layer has a thickness of from 40µm to 60µm.

10. A screening arrangement according to any preceding claim, wherein the metal layer comprises aluminium.

11. A screening arrangement according to any preceding claim, wherein the adhesive used to bond the fabric layer to the metal layer comprises polyacrylonitrile, or is an aromatic or aliphatic thermoplastic polyurethane, or a silicone hot melt.

12. A screening arrangement according to any preceding claim, wherein the screening portion comprises a plurality of cells between the first end edge and the second end edge, each cell being adapted to extend, in use, substantially in the first longitudinal direction, the cross section and volume of each cell being adjustable.

13. A screening arrangement according to Claim 12, wherein the perimeter of each cell is delimited by the metal layer adhesively bound to the fabric layer.

14. A screening arrangement according to Claim 13, wherein the cells are arranged with the metal layer facing the interior of the cell.

15. A screening arrangement according to Claims 12, 13 or 14, wherein the cells are adapted to have a substantially hexagonal, square, diamond, circular, elliptical or triangular cross section in the screening position.

16. A screening arrangement according to any of Claims 12 to 15, wherein neighbouring cells are adhesively bound to one another.

17. A screening arrangement according to any preceding claim, the screening arrangement further comprising at least one cord system including a plurality of cords, the cords being affixed to the first and/or second operating elements.

18. A screening arrangement according to any preceding claim, wherein the first operating element and the second operating element are both adapted for movement along the side rails, or wherein one of the first operating element and second operating element is adapted for movement along the side rails and the other one is adapted to be fixed, directly or indirectly to a frame of a building such that it is not moveable along the side rails.
